(19) Europäisches Patentamt / European Patent Office / Office européen des brevets

(11) EP 2 817 266 B1

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(21) Anmeldenummer: **13704942.5**

(22) Anmeldetag: **18.02.2013**

(51) Int Cl.:
***C03B 5/225*** (2006.01)
***C03C 10/12*** (2006.01)
***C03C 1/00*** (2006.01)
***C03C 3/085*** (2006.01)
***C03C 3/087*** (2006.01)

(86) Internationale Anmeldenummer:
**PCT/EP2013/053153**

(87) Internationale Veröffentlichungsnummer:
**WO 2013/124231 (29.08.2013 Gazette 2013/35)**

(54) **VERFAHREN ZUR HERSTELLUNG VON GLÄSERN**

METHOD FOR PRODUCING GLASSES

PROCÉDÉ DE FABRICATION DE VERRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2012 DE 102012202696**

(43) Veröffentlichungstag der Anmeldung:
**31.12.2014 Patentblatt 2015/01**

(73) Patentinhaber: **Schott AG**
**55122 Mainz (DE)**

(72) Erfinder:
- **LENTES, Frank-Thomas**
**55411 Bingen (DE)**
- **NAUMANN, Karin**
**55270 Ober-Olm (DE)**
- **SCHIFFNER, Ulrich**
**55126 Mainz (DE)**
- **SIEBERS, Friedrich**
**55283 Nierstein (DE)**
- **MÜLLER, Christian**
**55122 Mainz (DE)**
- **SCHÖNBERGER, Klaus**
**55127 Mainz (DE)**
- **WEISS, Evelin**
**55131 Mainz (DE)**

(74) Vertreter: **Mehler Achler**
**Patentanwälte Partnerschaft mbB**
**Bahnhofstraße 67**
**65185 Wiesbaden (DE)**

(56) Entgegenhaltungen:
**US-A1- 2011 160 033**

- **DATABASE WPI Week 200521 Thomson Scientific, London, GB; AN 2005-199892 XP002695366, -& JP 2005 053711 A (NIPPON ELECTRIC GLASS CO) 3. März 2005 (2005-03-03)**

EP 2 817 266 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von Gläsern, insbesondere von LAS-Gläsern und alkalifreien Alumosilicat-Gläsern, und von Gläsern für die Erzeugung von Glaskeramiken.

Bei der Herstellung von Glas wird ein Gemenge in eine Schmelzwanne eingebracht und das Gemenge erschmolzen, wobei das Gemenge zunächst in das Stadium der Gemengehaufenphase überführt wird, die auch als Rauhschmelze bezeichnet wird, die den Einschmelzvorgang des Gemenges beschreibt.
Hierbei bildet sich eine Gemengedecke aus, unterhalb der die Schmelze sich in Form einer linksdrehenden Hauptströmungswalze bewegt. Von dieser Strömungswalze löst sich teilweise ein heißer Schmelzenstrom ab, der nach oben aufsteigt. Dieser Punkt wird als thermischer Quellpunkt bezeichnet. Der Quellpunkt markiert in einer Schmelzwanne den Übergang von dem ersten Bereich in den zweiten Bereich der Wanne.
In "Glastechnische Fabrikationsfehler", herausgegeben von H. Jepsen-Marwedel und R. Brückner, 4. Auflage, Springer-Verlag wird beschrieben, dass unter dem Einfluss der hohen Temperatur in der Schmelzwanne sich auf der Oberfläche des Gemenges eine dünne Schmelzeschicht ausbildet, deren Dicke nur einige Millimeter beträgt und die unter der Einwirkung der Schwerkraft abfließt. Durch die aus dem Innern des Gemenges ausbrechenden Gase, die große Blasen bilden und die Schmelzschicht löchrig erscheinen lassen, wird die neugebildete Glasschmelze vom Gemenge abgedrängt.

Im Wesentlichen wird das Gemenge durch die unter den Gemengeteppich eintauchende Glasströmung erhitzt und aufgeschmolzen. Das an der heißen Schmelzfront an der Gemengeunterseite gebildete Reaktionsgas dringt in die poröse Gemengeschicht ein und strömt durch die Hohlräume nach oben.

Der Temperaturanstieg im Innern der Gemengeschicht verläuft langsam, so dass genügend Zeit für den Ablauf der Schmelzreaktionen bleibt. Die Reaktionen in der Gemengehaufenphase sind für die einzelnen Glassysteme verschieden. Allgemein gilt jedoch, dass zuerst die aktiveren Komponenten durch Feststoffreaktionen feste Lösungen und eutektische Phasen bilden, die dann durch Ausbildung von Schmelze die weiteren Reaktionen auch zwischen den reaktionsträgeren Gemengebestandteilen beschleunigen.

Während der Rauhschmelze sind bis ca. 1400 °C silicatbildende Reaktionen abgeschlossen und anschließend werden die restlichen Quarzkörner, $Al_2O_3$-Körner und zirkonhaltige Körner aufgelöst. Für die Geschwindigkeit der Auflösung ist neben der Temperatur die Menge der ungelösten Körner und ihre Größe bestimmend.

Dem Gemenge können auch Scherben, bevorzugt arteigene Scherben in einer Konzentration bis über 50% zugesetzt werden.

Mit dem Gemenge kommen bis zu 20 Gew% Gase, die an die Rohstoffe gebunden sind, in die Schmelzwanne. Durch die Zersetzung dieser Rohstoffe, insbesondere der Carbonate, wird eine riesige Menge an Gasen frei, von denen die Hauptmenge während der Gemengehaufenreaktion und der Rauhschmelze an die Ofenatmosphäre abgegeben wird. Der in Form von Blasen nach der Rauhschmelze noch verbliebene Rest von etwa 0,001 bis 0,1 Vol.% der freigesetzten Gasmenge sowie die gelöst in der Schmelze verbliebenen Gase müssen während der nachfolgenden Läuterprozesse entfernt bzw. auf ein nicht mehr störendes Maß reduziert werden.

Vor allem während des Auflöseprozesses von Sandkörnern und zirkonhaltigen Körnern entstehen an diesen feine Gasbläschen, die ebenfalls aus der Glasschmelze entfernt werden müssen.

Es ist Aufgabe der Läuterung, die noch vorhandenen Blasen zu entfernen, die Konzentration gelöster Gase, die Anlass zum Nachgasen sein könnten, zu vermindern und die Schmelze zu homogenisieren. Hierzu werden in der Glastechnik thermische, mechanische und chemische Läuterverfahren oder eine Kombination derselben eingesetzt.

Alle verfahrenstechnischen Maßnahmen zur Läuterung haben zum Ziel, die Aufstiegsgeschwindigkeit *v* von Blasen und damit die Zeit für den Blasenaufstieg zu verkürzen. Die Blasenaufstiegsgeschwindigkeit *v* von Blasen mit einem Durchmesser d ist nach Stokes gegeben durch:

$$v = \frac{1}{18}\frac{g\,\rho\,d^2}{\eta}.$$

(g: Erdbeschleunigung; p: Dichte der Glasschmelze, $\eta$: Viskosität der Glasschmelze) Um die Blasenaufstiegsgeschwindigkeit zu erhöhen, kann man im wesentlichen zwei Parameter verändern: den Durchmesser der Blasen d vergrößern (sehr wirksam wegen $d^2$) und/oder die Viskosität der Glasschmelze durch Temperaturerhöhung im Läuterbereich verringern.

In der DE 199 39 771 A1 wird beschrieben, dass allgemein zwei prinzipielle Läuterverfahren bekannt sind, die sich im Wesentlichen durch die Art und Weise der Läutergaserzeugung unterscheiden.

Bei den physikalischen Läuterverfahren wird die Viskosität der Glasschmelze durch Temperaturerhöhung erniedrigt. Zur Erniedrigung der Viskosität werden daher während der Läuterung höhere Temperaturen der Glasschmelze eingestellt als im Einschmelz- und Abstehbereich. Je höher die Läutertemperatur gewählt werden kann, umso effektiver

ist die Blasenentfernung aus der Schmelze. Dabei sollte die Viskosität der Schmelze möglichst < $10^2$ dPa·s betragen. Die maximal zulässige Läutertemperatur wird aber durch die Temperaturbeständigkeit des Wandmaterials des jeweils verwendeten Schmelzaggregates begrenzt und liegt in konventionellen Schmelzwannen bei ca. 1720 °C.

Am häufigsten werden chemische Läuterverfahren verwendet. Das Prinzip besteht darin, dass dem Gemenge Verbindungen zugesetzt werden, die sich entweder zersetzen und Gase entstehen lassen oder die bei höheren Temperaturen flüchtig sind, oder die in einer Gleichgewichtsreaktion bei höheren Temperaturen Gase abgeben. Diese jeweiligen Gase diffundieren in die vorhandenen Blasen ein und vergrößern sie. Zur ersten Gruppe der Verbindungen gehört beispielsweise Natriumsulfat, das z.B. zur Läuterung von Kalk-Natron-Gläsern eingesetzt wird. Die Abgabe von $SO_2$ und $O_2$ erfolgt dabei in einem Temperaturbereich von 1100 °C bis 1450 °C mit einem Maximum bei 1380 °C. Dieser Temperaturbereich entspricht in etwa dem Läuterbereich solcher Gläser.

Zur zweiten Gruppe der Verbindungen gehören z.B. Natriumchloride und zur letzten Gruppe der Verbindungen, gehören polyvalente Ionen wie $As_2O_3$ oder $SnO_2$.

Die DE 10 2009 021 116 A1 offenbart ein Verfahren zur Herstellung von Borosilikatgläsern unter Verwendung von Vanadiumpentoxid ($V_2O_5$) als Läutermittel. Die hergestellten Gläser werden lediglich als blasenarm bezeichnet.

Die US 2011/0160033 A1 befasst sich mit der Bruchfestigkeit von kristallisierbaren Gläsern, die einem Kristallisationsschritt unterworfen werden. Hierbei spielt die Glasungsfestigkeit eine große Rolle, die widerum vom $SnO_2$-Gehalt abhängt. Zur Lösung dieses Problems wird hier vorgeschlagen, den $SnO_2$-Gehalt in der Oberflächenschicht während des Float-Verfahrens zu kontrollieren, also in einem Verfahrensschritt, der sich an dem Schmelzvorgang anschließt. Die US 2011/0160033 A1 offenbart ein Verfahren zur Herstellung von LAS-Glaskeramikplatten für Kochflächen, wobei die Beispielzusammensetzungen 7 bis 10 frei von Arsen, Antimon und Zinn sind. Wenn $SnO_2$ und/oder Chlor als Läutermittel eingesetzt werden, können die Schmelzzeiten und -temperaturen bei 4 bis 24 Stunden liegen und bis zu 1780° betragen.

Die JP 2005/053711 A offenbart eine LAS-Glaskeramik mit Helium- und/oder Neonanteilen und mit reduziertem $As_2O_3$-Anteil.

Aus der DE 199 39 787 A1 sind Gläser für die Erzeugung von transparenter, eingefärbter Glaskeramik bekannt, bei deren Herstellung unter anderem $SnO_2$ oder Sulfatverbindungen als Läutermittel eingesetzt werden. Diese Läutermittel werden als Ersatz für die Läutermittel Arsenoxid oder Antimonoxid eingesetzt. Die Hochtemperaturläuterung findet bei Temperaturen von mehr als 1975 °C statt. Angaben über die erreichte Blasenzahl werden jedoch bei Gläsern mit derartigen Läutermitteln nicht gemacht.

Es hat sich gezeigt, dass es bei der Verwendung von Sulfaten während der Hochtemperaturläuterung über 1750 °C durch die stark ansteigenden Partialdrücke von $O_2$ und vor allem von $SO_2$ auf > 5 bar zu spontaner Blasenneubildung (sogenannte Reboil-Blasen) kommt. Dadurch steigt die in den vorgeschalteten Läuterstufen erreichte niedrige Blasenkonzentration wieder an, so dass im Produkt eine Blasenkonzentration > 2/kg resultiert.

Die Aufgabe der Erfindung besteht darin, ein Verfahren zur Herstellung von blasenfreien Gläsern, insbesondere von LAS-Gläsern und alkalifreien Alumosilicat-Gläsern, und von blasenfreien Glaskeramiken anzugeben, die keine toxischen sowie keine zinnhaltigen Läutermittelkomponenten enthalten.

Unter Freiheit von toxischen Läutermitteln und von Zinn ist zu verstehen, dass bis auf natürliche Verunreinigungen der verwendeten Rohstoffe Arsen, Antimon und Zinn in Konzentrationen von weniger als 100 ppm im Gemenge enthalten sind.

Unter blasenfrei bzw. Blasenfreiheit wird eine Blasenkonzentration von < 2/kg verstanden, wobei eine Blase einen Gaseinschluss mit einem Durchmesser > 100 $\mu$m bezeichnet.

Diese Aufgabe wird hinsichtlich des Verfahrens zur Herstellung von Gläsern mit den Merkmalen des Patentanspruchs 1 gelöst.

Es wird ein arsen-, antimon- und zinn-freies Glasgemenge eingesetzt, wobei als Läutermittel mindestens eine Sulfatverbindung eingesetzt wird. In einem ersten Bereich der Schmelzwanne wird die mittlere Schmelztemperatur $T_1$ auf 1580 °C < $T_1 \leq$ 1660 °C und die mittlere Verweildauer der Schmelze $t_1$ auf 2 Stunden < $t_1 \leq$ 25 h eingestellt. In einem zweiten Bereich wird die mittlere Schmelztemperatur $T_2$ auf $T_2$ 1660 °C < $T_2 \leq$ 1720 °C und die mittlere Verweildauer der Schmelze $t_2$ auf 1 Stunde < $t_2 \leq$ 10 h eingestellt. Der Anteil des durch die Zersetzung der Sulfatverbindung entstandenen $SO_3$ wird spätestens während der Durchführung der Sekundärläuterung auf weniger als 0,002 Gew. % abgesenkt.

Der Wert von $SO_3$ kann bereits nach der Primärläuterung auf < 0,002 Gew. % eingestellt werden. Es kommt darauf an, dass der $SO_3$-Wert < 0,002 Gew. % spätestens nach der Sekundärläuterung erreicht wird.

Nach der Sekundärläuterung wird eine Hochtemperaturläuterung in einem Temperaturbereich von 1750 °C bis 2000 °C mit iener Verweildauer von 12 bis 20 min durchgeführt.

Unter der Primärläuterung wird die Entfernung von Blasen (und gelöster Gase) im Einschmelzbereich, also im Bereich der ersten Strömungswalze bis zum Quellpunkt verstanden. Dabei wird die Blasenkonzentration von ca. $10^7$ /kg bereits um mehrere Größenordnungen auf ca. $10^4$/kg reduziert.

Unter der Sekundärläuterung wird der Prozess nach dem ersten Quellpunkt (d.h. nach der Primärläuterung) verstanden, wobei durch eine Temperaturerhöhung der Schmelze um 50 °C und mehr sowohl deren Viskosität erniedrigt

und gleichzeitig der Blasendurchmesser vorhandener Blasen durch Eindiffusion von Gasen aus der Schmelze vergrößert wird, so dass die Blasen leichter aufsteigen und die Schmelze verlassen können.

Die Bereiche der Primär- und Sekundarläuterung können durch Einbauten wie Blasdüsen, Wälle oder Hängesteine getrennt werden. Auch können die Primär-und Sekundärläuterung in zwei getrennten Kammern oder zwei getrennten Schmelzwannen durchgeführt werden. Jeder Bereich befindet sich in einer Kammer oder einer Wanne, wobei die Kammern oder Wannen beispielsweise durch einen Kanal miteinander verbunden sind.

Unter Gläsern und Glaskeramiken werden vorzugsweise solche aus LAS-Gläsern sowie alkalifreie Alumosilicat-Gläser und aus diesen Gläsern hergestellte Glaskeramiken verstanden.

Unter LAS-Gläsern werden Lithium-Alumosilicat-Gläser verstanden. Zur Herstellung von Glaskeramiken enthalten diese Gläser Keimbildner wie vorzugsweise $TiO_2$ und $ZrO_2$. Die LAS-Gläser können in einem weiteren thermischen Prozess in eine Glaskeramik umgewandelt werden.

Neben den LAS-Gläsern können auch alkalifreie Alumosilicat-Gläser, die Alkalien in einer Gesamtkonzentration von weniger als 0,2 Gew% enthalten, nach diesem Verfahren hergestellt werden.

Unter der mittleren Schmelztemperatur wird die zeit- und ortsgemittelte Temperatur im Bereich der jeweiligen Strömungswalze, also zum Beispiel in der ersten Strömungswalze, verstanden.

Unter der mittleren Verweildauer t der Schmelze in den betreffenden beiden Bereichen einer Schmelzwanne wird

$$t = \frac{\rho\, A_i\, L_i}{\dot{m}}$$

($\dot{m}$ : Massendurchsatz [kg/d mit d=Tag], p: Dichte der Schmelze [kg/m$^3$], $A_i$: Querschnittsfläche der Wanne im *i*-ten Abschnitt [m$^2$]; $L_i$: Länge des *i*-ten Aggregatabschnittes [m]) verstanden.

Die mittlere Verweildauer der Schmelze in den beiden Bereichen kann z. B. durch die Länge der Wanne eingestellt werden.

Es hat sich überraschend herausgestellt, dass Sulfatverbindungen als Läutermittel eingesetzt werden können, ohne dass der nachteilige Effekt der Reboilblasenbildung während der abschließenden Hochtemperaturläuterung auftritt, wenn Temperatur und Verweilzeiten in der Schmelzwanne erfindungsgemäß eingestellt werden.

Es hat sich gezeigt, dass der Blasenkonzentration und dem Schwefelanteil in der Glasschmelze am Ende der Wanne (nach Primär- und Sekundärläuterung) eine entscheidende Bedeutung für die Erzielung der Blasenfreiheit des Endproduktes zukommt.

Es wurde festgestellt, dass dann, wenn in der Schmelzwanne bei Temperaturen > 1580 °C mit Verweilzeiten > 2 h eingeschmolzen und eine Primärläuterung durchgeführt wird, eine Blasenkonzentration < 5000/kg erreicht wird und wenn dann bei Temperaturen > 1660 °C mit Verweilzeiten > 1h eine Sekundärläuterung durchgeführt wird, die Blasenkonzentration weiter auf < 1000/kg, bevorzugt < 600/kg gesenkt wird.

Es hat sich gezeigt, dass bei diesen Werten am Ende der Sekundärläuterung mit einer anschließenden Hochtemperaturläuterung eine nahezu vollständige Blasenfreiheit des Glases mit Blasenzahlen < 2 Blasen/kg erreicht werden kann.

Ein $SO_3$-Gehalt in der Schmelze von < 0,002 Gew.%, vorzugsweise von <0,0018 Gew.% und insbesondere von < 0,0015 Gew.% spätestens nach der Sekundärläuterung garantiert, dass der Reboileffekt während der Hochtemperatur-Läuterung nicht beobachtet wird. Je geringer der $SO_3$-Anteil ist, desto wirksamer wird der Reboileffekt unterbunden.

Der Erfindung liegt daher die Erkenntnis zugrunde, dass eine nahezu vollständige Umsetzung der Sulfatverbindung angestrebt werden muss, bevor die Hochtemperaturläuterung durchgeführt wird. Das bedeutet, dass das in der Schmelze vorhandene $SO_3$ gemäß folgender Reaktion

$$SO_3 \rightarrow SO_2 + \frac{1}{2} O_2 \uparrow$$

nahezu vollständig entfernt wird, so dass der Restgehalt an $SO_3$ weniger als 0,002 Gew.%, bevorzugt < 0,0018 Gew.%, insbesondere < 0,0015 Gew.% beträgt.

Es ist daher wünschenswert, $SO_3$ (Sulfat) bereits vorzugsweise im Stadium der Rauhschmelze und während der Primärläuterung in $SO_2$ und $O_2$ aufzuspalten, damit die frei gewordene Gasmenge das Austragen der im Gemenge und in der Rauhschmelze enthaltenen Gase verstärken kann. Damit wird die Startblasenzahl für die sich anschließende Sekundärläuterung signifikant herabgesetzt. Während der Sekundärläuterung findet kaum noch oder nur noch ein geringer Umsatz von $SO_3$ statt, je nach dem wie viel $SO_3$ im Bereich der Primärläuterung aufgebraucht worden ist. Noch nicht umgesetztes $SO_3$ nach der Primärläuterung stört nicht, da diese Gläser keine weiteren zugesetzten polyvalenten

Oxide als Läutermittel enthalten, deren Umsatz durch nicht aufgebrauchtes $SO_3$ bei der Sekundärläuterung gehemmt werden würde. $SO_3$ (Sulfat) würde wegen des gekoppelten Gleichgewichts die bei der Sekundärläuterung angestrebte Zersetzung der polyvalenten Ionen unterdrücken. Bei den erfindungsgemäßen Gläsern ist also nicht entscheidend, wie viel $SO_3$ nach der Primärläuterung in $SO_2$ und $O_2$ umgesetzt wird, weil die Schmelze keine zusätzlichen polyvalente Oxide enthält, sondern es ist entscheidend, dass der Restgehalt an $SO_3$ nach Sekundärläuterung weniger als 0,002 Gew.%, bevorzugt < 0,0018 Gew.%, insbesondere < 0,0015 Gew.% beträgt, um eine erfolgreiche Hochtemperaturläuterung durchführen zu können.

Es hat sich gezeigt, dass bei Einhaltung der Temperaturen $T_1$ und $T_2$ in Verbindung mit den angegebenen Verweildauern $t_1$ und $t_2$ und der Abwesenheit von Arsen-, Antimon- und Zinnoxid die Kennwerte < 0,002 Gew.% für $SO_3$ und Blasenkonzentration < 1000 Blasen/kg bevorzugt < 600 Blasen/kg erreicht werden, so dass bei der nachfolgenden Hochtemperaturläuterung der Reboil-Effekt unterbunden wird und die Glasqualität hinsichtlich der Blasenkonzentration soweit gesteigert werden kann, dass Glas mit einer Blasenkonzentration von < 2 Blasen/kg, insbesondere von < 1 Blase/kg erzeugt werden kann.

Der Temperaturbereich für $T_1$ ist insbesondere > 1580 °C bis 1640 °C und besonders bevorzugt > 1600 °C bis 1640 °C.

Der Temperaturbereich für $T_2$ ist insbesondere > 1660 °C bis 1700 °C.

Die mittlere Verweildauer $t_1$ liegt insbesondere im Bereich > 2 h bis 15 h und besonders bevorzugt im Bereich von > 2 h bis 10 h.

Die mittlere Verweildauer $t_2$ liegt insbesondere im Bereich von > 1 h bis 6 h und besonders bevorzugt im Bereich von > 1 h bis 3 h.

Es ist bevorzugt, eher die mittlere Verweildauer $t_1$ zu verlängern als die mittlere Verweildauer $t_2$, weil es sich gezeigt hat, dass der Sulfatabbau und der Gasfluss im ersten Bereich der Wanne größer ist als im zweiten Bereich. Für das Verhältnis von $\frac{t_1}{t_2}$ gilt daher vorzugsweise $2 < \frac{t_1}{t_2} < 25$, insbesondere $10 < \frac{t_1}{t_2} < 25$.

Vorzugsweise wird als Läutermittel mindestens ein Alkalisulfat und/oder mindestens ein Erdalkalisulfat dem Glasgemenge zugegeben. Bei Alkalisulfaten wird Natriumsulfat bevorzugt und bei Erdalkalisulfaten werden bevorzugt $BaSO_4$ und/oder $CaSO_4$ eingesetzt. Je höher die Temperatur ist, bei der eingeschmolzen wird, umso bevorzugter sind Erdalkalisulfate im Vergleich zu Alkalisulfaten, weil die Freisetzung von $SO_2$ und $O_2$ bei höheren Temperaturen erfolgt.

Die Sulfatverbindung wird vorzugsweise in einer Menge dem Glasgemenge zugesetzt, die 0,05 bis 1 Gew.-% $SO_3$ entspricht. Wird der Wert von 0,05 Gew.-% unterschritten, dann werden zuwenig Gase im Bereich der Primär- und Sekundärläuterung entfernt und die Blasenkonzentration am Ende der Wanne liegt bei > 1000/kg.

Bei einem Überschreiten von maximal 1 Gew.-% besteht das Risiko übermäßiger Gasfreisetzung beim Einschmelzen und der Primärläuterung, verbunden mit Schaumbildung auf der Glasschmelze und nicht mehr ausreichender Blasenentfernung. Außerdem steigt die $SO_2$-Menge im Abgas.

Weitere bevorzugte Anteile der Sulfatverbindung sind solche, die 0,1 bis 0,8 Gew.-%, insbesondere 0,1 bis 0,6 Gew.-% $SO_3$ entsprechen.

Es hat sich auch gezeigt, dass die Sulfatverbindung die Zahl der Einschmelzrelikte reduziert. Beispielsweise werden Zirkonoxide bis 4 Gew% durch die Sulfatverbindung schneller aufgeschmolzen, weil die Zugabe von Sulfatverbindung die Benetzung der zirkonhaltigen Körner und auch der Sandkörner deutlich verbessert und eine Segregation der Reaktionspartner während des Einschmelzens unterdrückt. Die Auflösung von Relikten führt in der Regel zur Bildung neuer kleiner Blasen. Wird die Auflösung von Relikten bis über den Läuterbereich hinaus verschleppt, ist es nicht möglich, ein blasenfreies Glas zu erhalten. Deswegen ist das durch die Sulfatverbindung beschleunigte Auflösen von Gemengerelikten von großer Bedeutung für eine effektive Läuterung.

Die Rauhschmelze, die den Übergang vom Gemenge zur Schmelze beschreibt, ist durch poröse Gemengeschichten gekennzeichnet. Je nach Porosität können die im Gemenge enthaltenen Gase wie z. B. $N_2$, $NO_x$ und $CO_2$ mehr oder weniger leicht entweichen und stehen daher in den Folgeprozessen nicht oder nur zu einem geringen Anteil für die störende Blasenbildung zur Verfügung.

Vorzugsweise wird daher ein Glasgemenge eingesetzt, bei dem die mittlere Korngröße schwer schmelzender Komponenten 10 bis 300 $\mu$m beträgt. Unter schwer schmelzenden Komponenten werden die Stoffe Sand ($SiO_2$), $Al_2O_3$ und $ZrO_2$ bzw. Zirkon-Silicate verstanden.

Der Vorteil dieser Korngrößen besteht darin, dass die im Gemenge enthaltenen Gase noch besser ausgetragen werden können. Wenn die Korngröße in dem Bereich von 10 $\mu$m bis 300 $\mu$m, insbesondere im Bereich von 100 $\mu$m bis 250 $\mu$m, besonders bevorzugt im Bereich von 150 $\mu$m bis 200 $\mu$m liegt, wird das Austragen der im Gemenge enthaltenen Gase deutlich verstärkt.

Durch die Wahl der mittleren Korngröße kann die Dauer der Schmelze im Stadium der Rauhschmelze eingestellt werden. Je grober das Gemenge und insbesondere die mittlere Korngröße der schwer schmelzenden Komponenten

gewählt wird, desto länger ist dann auch die Verweildauer $t_1$ zu wählen.

Es kann auch von Vorteil sein, bereits die mittlere Verweildauer des Gemenges im Stadium der Rauhschmelze so einzustellen, dass nur die für die Primärläuterung notwendige Läutermittelmenge übrigbleibt.

Vorzugsweise wird die Hochtemperaturläuterung in Form einer physikalischen Läuterung durch Viskositätserniedrigung der Schmelze durchgeführt. Aufgrund der Tatsache, dass die Sulfatverbindung durch Primär- und Sekundärläuterung in der Wanne verbraucht ist, steht kein Läutermittel mehr im Hochtemperaturläuter-Aggregat (außer Spuren anderer in der Schmelze gelöster Gase) zur Verfügung, so dass eine chemische Läuterung im Rahmen der Hochtemperaturläuterung ausscheidet.

Die Blasenkonzentration beträgt nach der Hochtemperaturläuterung < 2/kg, bevorzugt < 1/kg.

Vorzugsweise wird das Glasgemenge im ersten Bereich oxidierend eingeschmolzen. Das oxidische Einschmelzen wird durch die Einstellung der fossilen Brenner ebenso bewirkt wie durch die Sulfatverbindung selbst und hat den Vorteil, dass ein möglichst großer Anteil der Sulfatverbindung als $SO_3$ vor seiner Zersetzung gelöst wird.

Vorzugsweise wird dem Glasgemenge Nitrat in einer Menge von 0 bis 3 Gew.-% zugesetzt. Die Zugabe von Nitrat als Oxidationsmittel, insbesondere von $NaNO_3$, verbessert die Schwefellöslichkeit in der Schmelze, was sich insofern positiv auswirkt, als dadurch die allzu frühzeitige Zersetzung der Sulfatverbindung gehemmt wird. Darüber hinaus wird die Absenkung des $O_2$-Partialdruckes in der Schmelze durch etwaige Reste reduzierender Verunreinigungen (z.B. organische Verbindungen im Gemenge) vermieden.

Mit dem erfindungsgemäßen Verfahren können sowohl transparente, farblose als auch transparente, eingefärbte Gläser hergestellt werden.

Ein Glas bzw. eine Glaskeramik wird als transparent bezeichnet, wenn bei einer Schichtdicke von 4 mm der Transmissionsgrad im Wellenlängenbereich von 400 nm bis 2450 nm mehr als 80% beträgt.

Ein Glas bzw. eine Glaskeramik wird als farblos bezeichnet, wenn die Buntheit C* im CIE-LAB-Farbsystem < 10 bei einer Glasdicke von 4 mm beträgt.

Ein Glas bzw. eine Glaskeramik wird als eingefärbt bezeichnet, wenn C* ≥ 10 beträgt bei einer Glasdicke von 4 mm. Das Verfahren kann mit einer kontinuierlichen oder einer diskontinuierlichen Betriebsweise durchgeführt werden.

Eine kontinuierliche Betriebsweise liegt vor, wenn die Zuführung mit Rohstoffen dauerhaft und quasi-konstant erfolgt, diese in Glas umgewandelt werden und das Glas ebenso dauerhaft und quasi-konstant am Ausgang des Aggregates abgezogen wird, so dass sich im Innern der Schmelzanlage ein Fließgleichgewicht mit einem weitgehend konstanten Volumenstrom einstellt.

Eine diskontinuierlichen Betriebsweise liegt vor, wenn eine Schmelzanlage mit Rohstoffen gefüllt, diese in Glas umgewandelt werden und zu einem anderen Zeitpunkt eine vorgegebenes Glasvolumen abgezogen wird, das höchstens dem Volumen der Schmelzanlage entspricht; typischerweise wird eine bestimmte Menge Glas in eine Form gegossen.

Zum Schutz gegen eine mögliche $O_2$-Blasenbildung an Edelmetall-Bauteilen können der Glasschmelze polyvalente Oxide in Konzentrationen von höchstens 200 ppm hinzugefügt werden.

Ein weiterer positiver Einfluss auf die Blasenkonzentration wird vorzugsweise durch weitere Läuterzusätze wie Halogenide, z.B. Chloride, Fluoride und/oder Bromide erzielt, die vorzugweise bis zu 1 Gew.% dem Glasgemenge zugegeben werden.

Zur weiteren Erleichterung des Aufschmelzens können dem Gemenge bis zu 70 Gew.% Scherben zugegeben werden, die vorzugsweise der jeweiligen Glaszusammensetzung des Gemenges entsprechen.

Das Verfahren zur Herstellung von Glaskeramiken sieht vor, dass ein Glas nach dem erfindungsgemäßen Verfahren hergestellt wird und dieses Glas durch eine thermische Nachbehandlung in eine Glaskeramik umgewandelt wird.

Das Glas oder die Glaskeramik

- ist bis auf unvermeidliche Rohstoffverunreinigungen mit Konzentrationen von weniger als 100 ppm frei von As, Sb und Sn,

- weist eine Blasenkonzentration < 2/kg auf, und

- weist einen Anteil an $SO_3$ < 0,002 Gew.% auf.

Der Anteil von $SO_3$ kann bei ≤ 0,0018 Gew.%, insbesondere bei ≤ 0,0015 Gew.% liegen.

Dieses Glas oder diese Glaskeramik kann folgende Zusammensetzung (in Gew.%) aufweisen:

| | |
|---|---|
| $Li_2O$ | 2,5 - 5,5 |
| $Na_2O$ | 0 - 3,0 |
| $K_2O$ | 0 - 3,0 |
| $\Sigma Na_2O+K_2O$ | 0 - 4,0 |
| MgO | 0 - 3,0 |
| CaO | 0 - 5,0 |
| SrO | 0 - 2,0 |
| BaO | 0 - 4,0 |
| ZnO | 0,1 - 4,0 |
| $Al_2O_3$ | 15 - 27 |
| $SiO_2$ | 52 - 75 |
| $TiO_2$ | 0 - 5,5 |
| $ZrO_2$ | 0,1 - 4,0 |
| $B_2O_3$ | 0 - 4,0 |
| $\Sigma$ $TiO_2+ZrO_2$ | 0,1 - 6,0 |
| $P_2O_5$ | 0 - 8,0 |
| $Nd_2O_3$ | 0 - 0,4 |

Die Zusammensetzung dieses Glases oder dieser Glaskeramik kann wie folgt (in Gew.%) sein:

| | |
|---|---|
| $Li_2O$ | 3,0-5,5 |
| $Na_2O$ | 0 - 1,5 |
| $K_2O$ | 0 - 1,5 |
| $\Sigma Na_2O+K_2O$ | 0,2-2,0 |
| MgO | 0 - 2,0 |
| CaO | 0 - 4,5 |
| SrO | 0 - 1,5 |
| BaO | 0 - 2,5 |
| $\Sigma$ MgO+CaO+SrO+BaO | 0,5-5,0 |
| ZnO | 0,2-3,0 |
| $Al_2O_3$ | 17 - 25 |
| $SiO_2$ | 55 - 72 |
| $TiO_2$ | 0 - 4,0 |
| $ZrO_2$ | 0,1-3,0 |
| $B_2O_3$ | 0 - 4,0 |
| $\Sigma$ $TiO_2+ZrO_2$ | 0,5-6,0 |
| $P_2O_5$ | 0 - 8,0 |
| $Nd_2O_3$ | 0 - 0,3 |

$TiO_2$ kann zwingend in der Zusammensetzung enthalten sein. Der Anteil an $TiO_2$ beträgt insbesondere > 0,1 Gew. %.

Das erfindungsgemäß hergestellte Glas kann durch Walzen oder vorzugsweise im Float-Verfahren einer Formgebung unterworfen werden.

Aus der WO 2008/065166 ist bekannt, dass es beim Einsatz von $TiO_2$ als Keimbildner bei gleichzeitiger Anwesenheit von $Fe_2O_3$, $CeO_2$ oder $SnO_2$ zu Wechselwirkungen kommt, die die Transmission verringert und die Farbe in Richtung gelb bis gelbbraun verschiebt. Dieser Effekt ist vor allem bei $SnO_2$ stark ausgeprägt. Aus diesem Grund wird auf den Einsatz von $SnO_2$ als Läutermittel vollständig verzichtet.

Vorzugsweise weist das transparent farblose Glas oder die transparent farblose Glaskeramik bei einer Schichtdicke von 4 mm eine Lichttransmission Y > 87 % gemäß des CIE-Farbsystems und eine Buntheit C* < 4 gemäß des CIE-LAB-Farbsystems auf. Das gilt für rohstoff- und prozessbedingte Verunreinigungen an Fe2O3 <= 0,024 Gew%.

Die Buntheit (Chromizität) C* im CIE-LAB-System ist definiert durch $C* = \sqrt{A*^2 + B*^2}$, wobei A* und B*

die Farbkoordinaten in diesem System sind. Die Farbkoordinaten L*, A*, B* im CIE-LAB-System lassen sich in bekannter Weise in die Farbkoordinaten x und y und die Lichttransmission (Helligkeit) Y des CIE-Farbsystems umrechnen.

Die spektrale Lichttransmission wird an keramisierten und polierten LAS-Proben einer Dicke von 4 mm in einem Perkin-Elmer Lambda 9000 gemessen. Anschließend erfolgt die Umrechnung auf die Lichttransmission (Helligkeit) Y bei Normlicht C gemäß der Norm ASTM 1925/70.

Das Glas oder die Glaskeramik kann mindestens einen Zusatz aus der Gruppe der färbenden Komponenten V-, Cr-, Mn-, Fe-, Co-, Cu-, Ni-, Ce-, Se-Verbindungen mit Anteilen bis zu 1,5 Gew.% aufweisen, wodurch transparente, gefärbte Gläser und Glaskeramiken hergestellt werden.

Bevorzugte Verwendungen von Glaskeramiken hergestellt aus Glas nach dem erfindungsgemäßen Verfahren sind für Glaskeramik-Kochplatten vorgesehen.

Bevorzugte Verwendungen der Gläser hergestellt nach dem erfindungsgemäßen Verfahren oder der Glaskeramiken hergestellt aus Glas nach dem erfindungsgemäßen Verfahren sind für Sicherheitsverglasungen im Gebäude-, Fahrzeug- und Personenschutzbereich, für Sichtscheiben für Displays, für Festplattensubstrate, für Glaskeramik-Kochplatten und für Kaminsichtscheiben vorgesehen.

Die Erfindung wird nachfolgend anhand der Figuren näher erläutert.

Es zeigen:

Figur 1 schematisch eine Schmelzwanne mit nachgeordnetem Hochtemperaturaggregat, und

Figur 2 ein Gasfluss/Temperaturdiagramm.

In der Figur 1 ist eine Schmelzwanne 1 mit Einlegewand 2, Bodenwand 3 und Auslauf 4 dargestellt. Als bevorzugter Wannentyp wird eine konventionell fossil beheizbare Wanne mit oder ohne elektrische Zusatzbeheizung eingesetzt.

Die Schmelzwanne ist in einen ersten Bereich 10 und einen zweiten Bereich 20 unterteilt. Im ersten Bereich 10 wird das Gemenge aufgegeben, so dass sich dort zunächst eine Rauhschmelze mit einem porösen Gemengeteppich 12 ausbildet. Unterhalb des Gemengeteppichs 12 befindet sich aufgeschmolzenes Gemenge, in dem noch teilweise nicht aufgeschmolzene Partikel, insbesondere die schwer schmelzenden Komponenten vorhanden sind.

Es bildet sich unter dem Gemengeteppich 12 eine linksdrehende Hauptströmungswalze 13 aus, die unterhalb des Gemengeteppichs vorbeistreicht und kontinuierlich Material aufnimmt und in die Schmelze überführt.

Diese Hauptströmungswalze 13 erstreckt sich bis etwa in den mittleren Bereich der Schmelzwanne 1, wobei sich Teilströme 14 von der Hauptströmungswalze 13 ablösen und in den zweiten Bereich 20 strömen. Die Bereiche 10 und 20 können optional durch ein Einbauteil z. B. einen Wall 5, mit dem die heiße Glasschmelze zwangsweise an die Oberfläche der Schmelzwanne geführt wird, abgetrennt werden.

Beide Bereiche werden durch den so genannten Quellpunkt 15 getrennt, der auch als Hotspot bezeichnet wird. Dies ist ein Bereich mit einer hohen lokalen Temperatur der Schmelze.

In dem ersten Bereich 10 wird eine Primärläuterung durchgeführt. Die Temperatur $T_1$ in diesem Bereich 10 liegt oberhalb von 1580 °C. Im zweiten Bereich 20 liegt die Temperatur $T_2$ deutlich höher, nämlich über 1660 °C. In diesem zweiten Bereich wird die Sekundärläuterung durchgeführt.

Die mittlere Verweildauer $t_1$ im Bereich 10 beträgt mehr als zwei Stunden. Die mittlere Verweildauer kann durch verschiedene Parameter, wie z. B. durch die geometrischen Abmessungen, insbesondere die Länge der Wanne entsprechend eingestellt werden.

Dies gilt auch für die mittlere Verweildauer $t_2$ im zweiten Bereich 20, wo die mittlere Verweildauer $t_2$ mindestens eine Stunde betragen soll. Bei Einhaltung von Temperatur und Verweildauer wird gewährleistet, dass am Auslauf 4 die Konzentration von $SO_3$ in der Schmelze < 0,002 Gew.% und die Blasenkonzentration < 1000/kg betragen.

Der Auslauf 4 ist mit einem Hochtemperatur-Aggregat 6 verbunden, wo die Hochtemperaturläuterung stattfindet. Die Hochtemperaturläuterung wird bei Temperaturen > 1750 °C durchgeführt. Da der $SO_3$-Anteil < 0,002 Gew.% beträgt, kann der unerwünschte Reboil-Effekt aufgrund des niedrigen $SO_3$-Gehaltes nicht auftreten, so dass am Ende des Hochtemperatur-Aggregat 6 ein blasenfreies Glas (< 2 Blase/kg, vorzugsweise < 1 Blase/kg) erzeugt werden kann.

In der Figur 2 sind die freigesetzten Gasflüsse (Evolved Gas Analysis-Messungen, abgekürzt mit EGA-Messungen) als Funktion der Temperatur für die beiden Bereiche 10 und 20 einer LAS-Glaszusammensetzung aufgetragen. Für die Messungen werden 50g Gemenge mit 8K/min von Raumtemperatur auf 1680°C aufgeheizt und die freigesetzten Gase in Abhängigkeit von der Temperatur mittels Massenspektrometer analysiert. Das Diagramm in Figur 2 unterscheidet zwischen den Gasflüssen von $SO_2$ und $O_2$. Ab ca. 1000°C beginnt im porösem Gemengeteppich die Freisetzung von $SO_2$ und $O_2$ aufgrund der Zersetzung von Bariumsulfat. Dadurch werden zwischen den Gemengepartikeln befindliche Gase wie z.B. Luft aus dem Gemengeteppich entfernt (starke Unruhe im Kurvenverlauf). Mit weiter zunehmender Temperatur geht der poröse Gemengeteppich in eine Glasschmelze über und die $SO_2$- und $O_2$-Freisetzung klingt weiter ab. Ab ca. 1600°C sinkt die $SO_2$-Freisetzungen auf nahezu Null ab. Das langsamere Abklingen des $O_2$ ab 1600°C kann

durch Verunreinigungen hervorgerufen sein.

Es findet eine ausgeprägte Primärläuterung statt. In der Sekundärläuterung steht nur noch wenig oder gar kein $SO_3$ mehr zur Läutergaserzeugung zur Verfügung, so dass sichergestellt wird, dass am Ende der Wanne also nach dem Sekundärläuterbereich der $SO_3$-Anteil < 0,002 Gew.% beträgt.

Die Temperaturen der eben beschriebenen Gasflüsse (EGA-Messungen) sind nicht direkt auf Wannenverhältnisse übertragbar, da sich Aufheizraten und Oberflächen-Volumenverhältnisse zwischen Labormessungen und Wanne unterscheiden. Die Messungen zeigen die Temperaturbereiche der Läutergasfreisetzung unter Laborbedingungen an. Die tatsächlichen Temperaturen der Gasfreisetzung wurden im Kleinwannenversuch ermittelt und sind im Vergleich zu den EGA-Messungen nach höheren Temperaturen verschoben.

Die Erfindung wird anhand von Beispielen näher erläutert.

Tabelle 1: Glaszusammensetzungen aus den nachfolgenden Beispielen

| Oxide in Gew% | Zusammensetzung 1 | Zusammensetzung 2 | Zusammensetzung 3 | Zusammensetzung 4 (Vergleichsbeispiel) | Zusammensetzung 5 (Vergleichsbeispiel) |
|---|---|---|---|---|---|
| $Al_2O_3$ | 22,2 | 21,5 | 21,6 | 22,2 | 22,1 |
| BaO | 2,02 | - | 0,76 | 2,02 | 1,96 |
| $Fe_2O_3$ | 0,024 | 0,016 | 0,02 | 0,024 | 0,016 |
| $K_2O$ | - | 0,13 | 0,07 | - | - |
| $Li_2O$ | 3,80 | 3,83 | 3,59 | 3,80 | 3,81 |
| MgO | 0,59 | 1,02 | 0,86 | 0,59 | 0,57 |
| CaO | | | 0,12 | | |
| SrO | | | 0,49 | | |
| $Na_2O$ | 0,56 | 0,44 | 0,56 | 0,56 | 0,57 |
| $SiO_2$ | 65,0 | 67,3 | 66,0 | 65,0 | 65,2 |
| $SO_3$ Synthese | 0,52 | 0,47 | 0,26 | | |
| $TiO_2$ | 2,26 | 1,99 | 2,39 | 2,26 | 1,98 |
| ZnO | 1,76 | 1,75 | 1,79 | 1,76 | 1,82 |
| $ZrO_2$ | 1,76 | 1,81 | 1,74 | 1,76 | 1,82 |
| $SnO_2$ | | | | | 0,2 |
| Lichttransmission Y in % | 88,7 | 88,4 | 88,5 | 88,6 | 86,9 |
| Buntheit C* | 3,2 | 3,8 | 3,8 | 3,3 | 4,5 |

$SO_3$-Synthese bedeutet: Menge an $SO_3$ in Gew%, aus der Menge $SO_3$ wird die Menge $BaSO_4$ errechnet, das dem Gemenge zugesetzt wird. Alle anderen Angaben sind analytisch ermittelte Werte im Glas.

**Beispiel 1**

Im Labor wurden 1,4 kg Gemenge der LAS-Glaszusammensetzung 1 (ohne Zugabe von $As_2O_3$, $SnO_2$ und $Sb_2O_3$) mit konventionellen Rohstoffen (Quarzmehl, $Al_2O_3$, Al-Hydroxid, Ba-Nitrat, Na-Nitrat, Li-Carbonat, Ba-Carbonat, MgO, $TiO_2$, Zirkonsilicat, ZnO) und 0,53 Gew% $SO_3$ Läutermittel als Ba-Sulfat hergestellt.

Das Gemenge wurde im air-fuel betriebenen Gasofen bei Temperaturen von $T_1$ = 1620 °C mit $t_1$ = 3 h reliktfrei eingeschmolzen und anschließend in einer MF-Spule im Kieselglastiegel gerührt und mit $t_2$ = 3 h lang bei $T_2$ = 1680 °C gehalten, um eine Sekundärläuterung durchzuführen. Nach Ende der Schmelzzeit wurde das Glas gegossen und mit 20 K/h gekühlt. Das auf diese Weise hergestellte Glas enthielt noch ca. 600 Blasen/kg Glas. Der analysierte $SO_3$-Gehalt lag bei 0,00075 Gew%.

Nach der Bewertung des Glases im kalten Zustand wurde das nahezu läutermittelfreie/$SO_3$-arme Glas einer Hochtemperaturläuterung unterzogen. Dazu wurden zylindrische Bohrkerne aus der eben beschriebenen Schmelze passend für die Tiegel der Hochtemperaturläuterung hergestellt. Ein 55 mm hoher Bohrkern wurde in einem 140 ml Ir-Tiegel erneut auf 1600 °C aufgeheizt, zum gleichmäßigen Durchschmelzen 30 min bei 1600 °C gehalten und dann mit 975 K/h auf 1925 °C erhitzt und 12 min bei der hohen Temperatur gehalten. Anschließend wurde das heiße Glas in ca. 8 min auf 1500 °C abgekühlt, 10 min gehalten und dann im Kühlofen auf Raumtemperatur thermisch entspannt.

Das Glas war völlig blasenfrei, alle Blasen wurden entfernt und es kam nicht zu einer Neublasenbildung.

Das Glas wurde durch thermische Behandlung in eine Glaskeramik überführt. Die Glaskeramik hatte bei einer Schichtdicke von 4 mm eine Lichttransmission Y gemäß des CIE-Farbsystems von 88,7% und eine Buntheit C* im CIE-LAB-Farbsystem von 3,2.

Liegen die Temperaturen im 140 ml Hochtemperaturtiegel unter 1925 °C, sind Verweilzeiten von mindestens 15 min notwendig, um das läutermittelfreie/$SO_3$arme Glas mit Blasenzahlen von < 1000 Blasen/kg blasenfrei zu bekommen. Bei 2125 °C reichen kürzere Verweilzeiten aus, um ein blasenfreies Glas zu erhalten.

**Beispiel 2**

Ein weiteres LAS-Glasgemenge (Zusammensetzung 2 mit vergleichbaren Rohstoffen wie aus Beispiel 1) mit 0,47 Gew% $SO_3$ als Na-Sulfat wurde bei $T_1$ = 1580 °C mit $t_1$ = 3 h und anschließend bei $T_2$ = 1660 °C nur mit $t_2$ = 2 h geschmolzen. Die Blasenzahl betrug ca. 950 Blasen/kg. Der $SO_3$-Gehalt lag bei ca. 0,0010 Gew%.

Je höher die Blasenzahl vor Eintritt in den Hochtemperaturtiegel (Eingangsblasenzahl) ist, desto höher muss im Hochtemperaturläutertiegel die Läutertemperatur und/oder Verweilzeit sein. Das Glas war nach 1950 °C und 15 min Verweilzeit blasenfrei.

**Beispiel 3 (Vergleichsbeispiel mit $SO_3$ > 0,0020 Gew%)**

8,6 kg LAS-Glas-Gemenge (Zusammensetzung 1) mit 0,53 Gew% $SO_3$ als $BaSO_4$ wurden im Gasofen 3 h bei 1550 °C eingeschmolzen und anschließend bei 1600 °C für 1 h weiter geschmolzen. Der im Glas verbliebene $SO_3$-Gehalt betrug 0,0022 Gew%. Eine anschließende Hochtemperaturläuterung bei 1925 °C mit 15 min Haltezeit führte nicht zu einem blasenfreien Glas. Das Glas enthielt kleine Blasen (max. 100 $\mu$m Durchmesser), vor allem an den Tiegelwänden und an der 3-Phasengrenze Glas-Tiegel und Atmosphäre. Es kommt aufgrund des Partialdruckes des $SO_2$ ($pSO_2$) bzw. der $SO_3$-Konzentration zur so genannten Neublasenbildung.

**Beispiel 4 (Vergleichsbeispiel mit hohen Eingangsblasenzahlen)**

Ähnlich verhält sich ein LAS-Glasgemenge (Zusammensetzung 1) mit 0,53 Gew% $SO_3$ als Ba-Sulfat, das nur 3 h bei 1620 °C im Gasofen eingeschmolzen wurde (ohne 2. Temperaturschritt); das Glas enthielt ca. 2000 Bl/kg und der $SO_3$-Gehalt lag zwischen 0,0022 und 0,0025 Gew% $SO_3$. Nach der sich anschließenden Hochtemperaturläuterung bei 1925 °C für eine Zeitdauer von 15 min war das Glas nicht blasenfrei, sondern es enthielt sehr kleine Blasen, viele Blasen an der Tiegelwand und an der 3-Phasengrenze.

Anhand dieser Beispiele ist deutlich zu sehen, dass nur bei Einhaltung der beanspruchten Parameter ein blasenfreies Glas hergestellt werden kann. Die Blasenzahl der Vergleichsbeispiele zeigen, dass insbesondere hohe $SO_3$-Gehalte durch schlecht gewählte Primär- und Sekundärläutertemperaturen und Verweilzeiten zu einer Neublasenbildung im Hochtemperaturläuteraggregat führen. Dennoch kann nicht auf die Zugabe von Sulfat beim Gemenge verzichtet werden, denn sonst würden nicht die nach der Primär- und Sekundärläuterung notwendigen Blasenzahlen von

< 1000 Blasen/kg erreicht werden.

**Beispiel 5 Vergleichsbeispiel ohne Sulfat**

Ein Gemenge der LAS-Glaszusammensetzung 4 ohne Zugabe eines Sulfats (ohne Läutermittel-Zusatz) zeigte im Laborofen nach 3 h bei 1600 °C mit anschließender Aufheizung mit 300 K/h auf 1660 °C und einer Haltezeit von 2 h mehr als 5000 sehr kleine Blasen/kg und Einschmelzrelikte. Eine anschließende Hochtemperaturläuterung bei 1925 °C mit 15 min Verweilzeit führte nicht zu einem blasenfreien Glas. Die hohen Eingangsblasenzahlen konnten nicht vollständig beseitigt werden. Hinzu kommt, dass Gemengerelikte im Hochtemperaturtiegel permanent Quellen von kleinen Blasen sind und zwar aufgrund der sich verändernden Chemie des Glases und der Gaslöslichkeit.

**Beispiel 6**

Das Gemenge aus Beispiel 5 (Zusammensetzung 1), allerdings mit 0,53 Gew% $SO_3$ als Ba-Sulfat führte nach gleicher Temperatur-Zeitbehandlung nur zu max. 600 Blasen/kg, d.h. zu deutlich geringeren Blasenzahlen nach der Primär- und Sekundärläuterung. Die Schmelze war völlig reliktfrei und der $SO_3$-Gehalt lag bei 0,0012 Gew%. Eine nachträgliche Hochtemperaturläuterung bei 1900 °C mit 12 min Verweilzeit führte zu blasenfreiem Glas. Alle Eingangsblasen konnten reduziert werden und eine Neublasenbildung wurde nicht beobachtet.

**Beispiel 7**

Eine LAS-Glaszusammensetzung (Zusammensetzung 3) wurde in einer Kleinwanne geschmolzen. Verwendet wurden handelsübliche technische Rohstoffe (Quarzmehl, $Al_2O_3$, Al-Hydroxid, , Na-Nitrat, K-, Li-Carbonat, Ca-, Sr-, Ba-Carbonat, MgO, $TiO_2$, Zirkonsilicat, ZnO, Ba-Sulfat)) mit einem Gesamtgehalt an $Fe_2O_3$ von 0,0200 Gew%. Das Gemenge enthielt 0,26 Gew% $SO_3$, zugesetzt als Ba-Sulfat. Dem Gemenge wurden keine Farboxide zugesetzt. 0,56 Gew% $Na_2O$ wurde als Na-Nitrat zugegeben. Nach mittleren Schmelztemperaturen von 1580 °C bis 1600°C für die Primärläuterung wurde die Schmelztemperatur für die Sekundärläuterung auf über 1660 °C (mittlere Verweilzeiten jeweils >3h) erhöht. Probennahmen nach der Wanne zeigten, dass das Glas reliktfrei geschmolzen wurde. Die Blasenzahlen lagen zwischen 200 und max. 800 Blasen/kg je nach Schmelzparameter. Der Gehalt an $SO_3$ war in jedem Fall unter 0,0012 Gew%.

Die anschließende Hochtemperaturläuterung bei Temperaturen zwischen 1760 °C und ca. 1900 °C mit mittleren Verweilzeiten von 12 bis 15 min führte zu Glas mit Blasenzahlen < 1 Blase/kg.

Das so hergestellte transparente farblose LAS-Glas wurde durch Keramisierung in eine Glaskeramik umgewandelt und Lichttransmission Y und Buntheit C* (Farbe) gemessen. Die Glaskeramik hatte bei einer Schichtdicke von 4 mm eine Lichttransmission Y gemäß des CIE-Farbsystems von 88,5% und eine Buntheit C* im CIE-LAB-Farbsystem von 3,8.

**Beispiel 8 Vergleichsbeispiel mit $SnO_2$ bzgl. erreichbarer Lichttransmission**

Eine LAS-Glaszusammensetzung 5 wurde in gleicher Weise wie in Beispiel 1 und auch wie in Beispiel 2 beschrieben im Labor im Gasofen geschmolzen und geläutert.

Die Blasenzahlen nach der Primär- und Sekundärläuterung lagen zwischen 200-600 Blasen/kg und auf der Oberfläche traten vermehrt $ZrO_2$-haltige Einschmelzrelikte auf.

Das so hergestellte farblose LAS-Glas wurde durch thermische Nachbehandlung in eine Glaskeramik umgewandelt und Transmission und Farbe gemessen. Die Glaskeramik hatte bei einer Schichtdicke von 4 mm eine Lichttransmission Y von 86,9 % im CIE-Farbsystem und eine Buntheit C* im CIE-LAB-Farbsystem von 4,5 bei 4 mm Schichtdicke. Durch die Zugabe von $SnO_2$ nimmt die Transmission deutlich ab bzw. die Buntheit steigt im Vergleich zur $SnO_2$-freien Sulfat-geläuterten Glaskeramik deutlich an.

**Bezugszeichenliste**

| | |
|---|---|
| 1 | Schmelzwanne |
| 2 | Einlegewand |
| 3 | Bodenwand |
| 4 | Auslauf |
| 5 | Wall |

6 Hochtemperaturtiegel
10 erster Bereich
12 Gemengeteppich
13 Hauptströmungswalze
14 Teilstrom
15 Quellpunkt
20 zweiter Bereich

## Patentansprüche

**1.** Verfahren zur Herstellung von Gläsern,
bei dem ein bis auf unvermeidliche Rohstoffverunreinigungen Arsen-, Antimon- und Zinn-freies Glasgemenge und als Läutermittel mindestens eine Sulfatverbindung eingesetzt wird,
wobei das das Läutermittel aufweisende Glasgemenge in einer Schmelzwanne (1) erschmolzen wird,
wobei in einem ersten Bereich (10) der Schmelzwanne (1) eingeschmolzen und eine Primärläuterung durchgeführt wird, wobei im ersten Bereich (10) eine mittlere Schmelztemperatur $T_1$ auf 1580 °C < $T_1 \leq$ 1660 °C und eine mittlere Verweildauer der Schmelze $t_1$ auf 2 Stunden < $t_1 \leq$ 25h eingestellt wird,
wobei in einem zweiten Bereich (20) der Schmelzwanne (1) eine Sekundärläuterung durchgeführt wird, wobei im zweiten Bereich (20) eine mittlere Schmelztemperatur $T_2$ auf 1660 °C < $T_2 \leq$ 1720°C und eine mittlere Verweildauer der Schmelze $t_2$ auf 1 Stunde < $t_2 \leq$ 10h eingestellt wird, und wobei der Anteil des durch Zersetzung der Sulfatverbindung entstandenen $SO_3$ spätestens während der Durchführung der Sekundärläuterung auf weniger als 0,002 Gew.% abgesenkt wird,
und
wobei nach der Sekundärläuterung eine Hochtemperaturläuterung in einem Temperaturbereich von 1750 °C bis 2000°C mit einer Verweildauer von 12 bis 20 min durchgeführt wird.

**2.** Verfahren nach Anspruch 1, **dadurch gekennzeichnet,**
**dass** als Läutermittel mindestens ein Alkalisulfat und/oder mindestens ein Erdalkalisulfat dem Glasgemenge zugegeben wird.

**3.** Verfahren nach Anspruch 1 und 2, **dadurch gekennzeichnet, dass** als Läutermittel $Na_2SO_4$ eingesetzt wird.

**4.** Verfahren nach Anspruch 1 oder 2, **dadurch gekennzeichnet,**
**dass** als Läutermittel $BaSO_4$ und/oder $CaSO_4$ eingesetzt wird.

**5.** Verfahren nach einem der vorhergehenden Ansprüche,
**dadurch gekennzeichnet,**
**dass** die Sulfatverbindung in einer Menge dem Gemenge zugesetzt wird, die 0,05 bis 1 Gew.-% $SO_3$ entspricht.

**6.** Verfahren nach einem der vorhergehenden Ansprüche,
**dadurch gekennzeichnet,**
**dass** im ersten Bereich (10) oxidierend eingeschmolzen wird.

**7.** Verfahren nach einem der vorhergehenden Ansprüche,
**dadurch gekennzeichnet,**
**dass** dem Glasgemenge Nitrat in einer Konzentration von 0 bis 3 Gew.-% zugegeben wird.

**8.** Verfahren nach einem der vorhergehenden Ansprüche,
**dadurch gekennzeichnet,**
**dass** transparente, farblose Gläser hergestellt werden.

**9.** Verfahren nach einem der Ansprüche 1 bis 7, **dadurch gekennzeichnet, dass** transparente, gefärbte Gläser durch Zusatz färbender Komponenten hergestellt werden.

**10.** Verfahren zur Herstellung von Glaskeramiken,
wobei ein Glas gemäß einem der Ansprüche 1 bis 9 hergestellt wird und
wobei das Glas durch thermische Behandlung in eine Glaskeramik umgewandelt wird.

## Claims

1. Method for producing glasses, in which an - except for unavoidable raw material impurities - arsenic-, antimony- and tin-free glass mixture is used and at least one sulphate compound is used as a refining agent, wherein the glass mixture comprising the refining agent is melted down in a melting tank (1), wherein in a first region (10) of the melting tank (1) melting down and primary refining is carried out, wherein in the first region (10) an average melting temperature $T_1$ is adjusted to 1580 °C < $T_1$ ≤ 1660 °C and an average dwell time of the melt $t_1$ is adjusted to 2h < $t_1$ ≤ 25h, wherein in a second region (20) of the melting tank (1) secondary refining is carried out, wherein in the second region (20) an average melting temperature $T_2$ is adjusted to 1660 °C < $T_2$ ≤ 1720 °C and an average dwell time of the melt $t_2$ is adjusted to 1h < $t_2$ ≤ 10h, and wherein the proportion of the $SO_3$ caused by decomposition of the sulphate compound is reduced to less than 0.002 wt.% at the latest while the secondary refining is carried out, and wherein after the secondary refining high-temperature refining is carried out in a temperature range of 1750 °C to 2000°C with a dwell time from 12 to 20 min.

2. A method according to claim 1, **characterised in that**, at least one alkali sulphate and/or at least one alkaline-earth sulphate is added to the glass mixture as a refining agent.

3. A method according to claim 1 and 2, **characterised in that,** $Na_2SO_4$ is used as the refining agent.

4. A method according to claim 1 and 2, **characterised in that** $BaSO_4$ and/or $CaSO_4$ is used as the refining agent.

5. A method according to one of the preceding claims, **characterised in that** the sulphate compound is added to the mixture in a quantity which corresponds to 0.05 to 1 wt.% of $SO_3$.

6. A method according to one of the preceding claims, **characterised in that** oxidising melting down is carried out in the first region (10).

7. A method according to one of the preceding claims, **characterised in that** nitrate is added to the glass mixture in a concentration from 0 to 3 wt.%

8. A method according to one of the preceding claims, **characterised in that** transparent colourless glasses are produced.

9. A method according to one of claims 1 to 7, **characterised in that** transparent coloured glasses are produced by adding colouring components.

10. A method for producing glass ceramics, wherein a glass is produced according to one of claims 1 to 9 and wherein the glass is transformed into a glass ceramic using thermal treatment.

## Revendications

1. Procédé de fabrication de verres, dans lequel un mélange vitrifiable ne présentant, à part des impuretés inévitables de matières premières, ni arsenic, ni antimoine ni zinc, ainsi qu'au moins un composé de sulfate en tant d'agent d'affinage sont utilisés, le mélange vitrifiable présentant l'agent d'affinage étant mis à fondre dans une cuve de fusion (1), la fusion et un affinage primaire étant réalisés dans une première zone (10) de la cuve de fusion (1), dans la première zone (10), une température de fusion moyenne $T_1$ étant réglée sur 1580 °C < $T_1$ ≤ 1660 °C et un temps de séjour moyen de la matière fondue $t_1$ étant réglé sur 2 heures < $t_1$ ≤ 25 h, un affinage secondaire étant réalisé dans une deuxième zone (20) de la cuve de fusion (1), dans la deuxième zone (20), une température de fusion moyenne $T_2$ étant réglée sur 1660 °C < $T_2$ ≤ 1720 °C et un temps de séjour moyen de la matière fondue $t_2$ étant réglé sur 1 heure < $t_2$ ≤ 10 h et la fraction de $SO_3$ produite par décomposition du composé de sulfate étant abaissée au plus tard pendant l'affinage secondaire à moins de 0,002 % en poids et

après l'affinage secondaire, un affinage à température élevée étant réalisé dans une plage de température de 1750 °C à 2000 °C avec un temps de séjour de 12 à 20 min.

**2.** Procédé selon la revendication 1, **caractérisé en ce qu'**au moins un sulfate alcalin et/ou au moins un sulfate alcalino-terreux est ajouté au mélange vitrifiable comme agent d'affinage.

**3.** Procédé selon la revendication 1 et 2, **caractérisé en ce que** du $Na_2SO_4$ est utilisé comme agent d'affinage.

**4.** Procédé selon la revendication 1 ou 2, **caractérisé en ce que** du $BaSO_4$ et/ou du $CaSO_4$ est utilisé comme agent d'affinage.

**5.** Procédé selon une des revendications précédentes, **caractérisé en ce que** le composé de sulfate est ajouté en une quantité au mélange, qui correspond à de 0,05 à 1 % en poids du $SO_3$.

**6.** Procédé selon une des revendications précédentes, **caractérisé en ce que** la fusion est réalisée par oxydation dans la première zone (10).

**7.** Procédé selon une des revendications précédentes, **caractérisé en ce que** du nitrate en une concentration de 0 à 3 % en poids est ajouté au mélange vitrifiable.

**8.** Procédé selon une des revendications précédentes, **caractérisé en ce que** des verres incolores transparents sont fabriqués.

**9.** Procédé selon une des revendications 1 à 7, **caractérisé en ce que** des verres colorés transparents sont fabriqués par ajout de composants colorants.

**10.** Procédé de fabrication de vitrocéramiques,
un verre conforme à une des revendications 1à 9 étant fabriqué et le verre étant converti par traitement thermique en une vitrocéramique.

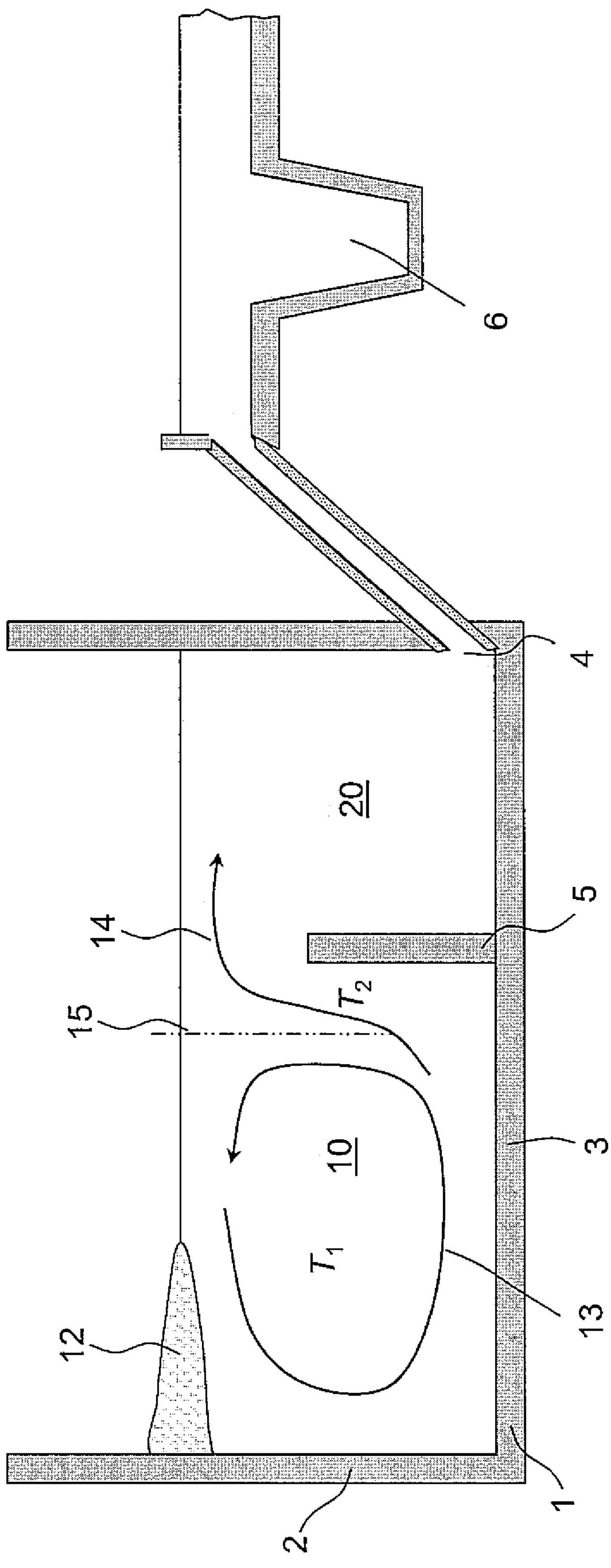


Figur 1

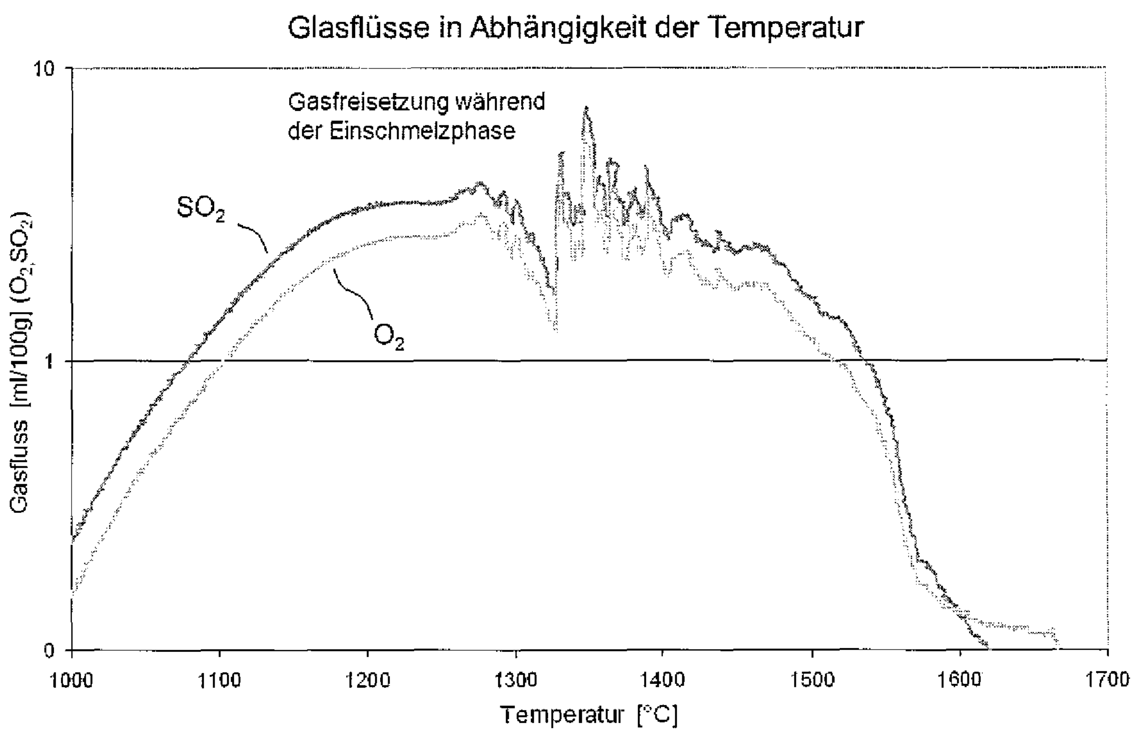
Glasflüsse in Abhängigkeit der Temperatur
Gasfreisetzung während der Einschmelzphase
SO2
O2
Gasfluss [ml/100g] (O2,SO2)
Temperatur [°C]
10
1
0
1000
1100
1200
1300
1400
1500
1600
1700

Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19939771 A1
- DE 102009021116 A1
- US 20110160033 A1
- JP 2005053711 A
- DE 19939787 A1
- WO 2008065166 A